# EUROPEAN PATENT APPLICATION

(11) **EP 4 262 219 A1**
(43) Date of publication of application: **18.10.2023**
(21) Application number: 23166149.7
(22) Date of filing: 31.03.2023
(51) Int. Cl.: H04N 21/414, H04N 21/4788, H04N 7/14, H04L 67/306, H04L 65/1066, G06Q 50/00, H04N 21/258, H04N 21/2668, H04N 21/2187, H04N 21/443

(54) **VIDEO MEDIATING APPARATUS, METHOD AND COMPUTER READABLE RECORDING MEDIUM THEREOF**

(30) Priority: 15.04.2022 KR 20220047179; 12.07.2022 KR 20220085765
(71) Applicant: Hyperconnect LLC, Seoul 06164 (KR)
(72) Inventor: KIM, Sung Ho, 06164 Seoul (KR)
(74) Representative: Zimmermann & Partner Patentanwälte mbB

(57) **Abstract**

Provided is a video mediating apparatus between a host terminal (200) and a user terminal (300-1, 300-2, ..., 300N), and a method and computer readable recording medium thereof. A video mediation method of the present disclosure includes, between a host terminal (200) and at least one user terminal (300-1, 300-2, ..., 300N), establishing (S1010) a main session for mediating a main video including a video transmitted from the host terminal (200) to the at least one user terminal (300-1, 300-2, ..., 300N), mediating (S1020) the main video through the main session, identifying (S1030) a user terminal set selected among the at least one user terminal (300-1, 300-2, ..., 300N), establishing S1040) a sub-session for mediating a sub-video including a video transmitted from the host terminal (200) to the user terminal set between the host terminal (200) and the user terminal set while maintaining the main session, and mediating (S1050) the sub-video through the sub-session while maintaining the main session.

## Description

### CROSS-REFERENCE TO RELATED APPLICATION(S)

This application claims the benefit of Korean Patent Application No. 10-2022-0047179, filed on April 15, 2022, and Korean Patent Application No. 10-2022-0085765, filed on July 12, 2022, in the Korean Intellectual Property Office, the disclosures of which are incorporated herein in their entireties by reference.

### BACKGROUND

### 1. Field of the Invention

Example embodiments, or embodiments of the disclosure, relate to an apparatus for mediating video between a host terminal and a user terminal, a method and a computer readable recording medium thereof.

### 2. Description of the Related Art

With the development of communication technology and the miniaturization of electronic devices, personal terminals have been widely distributed to general consumers, and using personal terminals, individuals connect to a video mediation platform and exchange videos and audio through video calls to communicate.

Recently, in particular, a single host can interact with unspecified users through live video calls, so that fans can more easily access stars and influencers.

However, while there is only one host, there are usually very many users accessing the host's live room. Thus, there is a demand for more intensive interaction with the host alone or with only a few selected users among the many users.

### SUMMARY

Many embodiments of the disclosure provide a solution for maintaining multiple video call sessions. Specifically, an aspect of the disclosure provides an apparatus that provides an environment in which a sub-video is mediated while maintaining the environment in which a main video is mediated, and a method thereof. The main video may be maintained in a main session that connects a host to multiple users, while presenting content from one of various live or pre-recorded sources, while maintaining the sub-video in a sub-session that connects the host to a subset of the users.

The technical problem to be solved by the present disclosure is not limited to that described above, and other technical problems may be inferred from the following example embodiments.

According to an aspect, there is provided a video mediation method performed on a server, between a host terminal and at least one user terminal, such as at least two terminals, including establishing, by the server, a main session for mediating a main video including a video transmitted from the host terminal to the at least one user terminal, such as at least two terminals, mediating, by the server, the main video through the main session, identifying, by the server, a user terminal set selected among the at least one user terminal such as selected among the at least two user terminals, establishing, by the server, a sub-session for mediating a sub-video including a video transmitted from the host terminal to the user terminal set between the host terminal and the user terminal set while maintaining the main session, and mediating, by the server, the sub-video through the sub-session while maintaining the main session. The main session may be established between the host terminal and at least one user terminal, at least two user terminals, or a plurality of user terminals such as at least three user terminals. The sub-session is established between the host terminal and the selected user terminal set.

According to an example embodiment, the mediating the sub-video may include mediating the sub-video by prioritizing data transmitted and received through the sub-session over data transmitted and received through the main session while maintaining both output of data transmitted and received through the main session and output of data transmitted and received through the sub-session.

According to another example embodiment, the mediating the sub-video may include controlling or causing, by the server, the host terminal to display at least a portion of data transmitted and received through the main session on a display area of the host terminal participating in the sub-session.

Further, according to an example embodiment, the mediating the main video may include, while the sub-session is maintained, controlling, by the server, a user terminal not participating in the sub-session so as not to display at least a portion of data transmitted and received through the sub-session for the user terminal not participating in the sub-session.

According to another example embodiment, the mediating the main video may include controlling, by the server, the user terminal not participating in the sub-session so that data indicating that the sub-session is being maintained is displayed on a display area of the user terminal not participating in the sub-session.

Further, according to an example embodiment, the identifying the user terminal set may include receiving, from the host terminal, an input for selecting a user profile displayed on a display area of the host terminal, identifying whether a user account corresponding to the selected user profile is in a state capable of participating in a sub-session, when the user account is capable of participating in the sub-session, transmitting a request to participate in the sub-session to a user terminal corresponding to the user account, and receiving acceptance of the request to participate in the sub-session from the user terminal that received the request to participate in the sub-session.

Further, according to an example embodiment, the identifying the user terminal set may include receiving, from the host terminal, an input for selecting a user account included in a list of users who applied for sub-video mediation, transmitting a request to participate in a sub-session to a user terminal corresponding to the selected user account, and receiving acceptance of the request to participate in the sub-session from the user terminal that received the request to participate in the sub-session.

With regard to this, according to an example embodiment, the list of users who applied for sub-video mediation may include a user account that sponsored a host account corresponding to the host terminal through the main session, and information on the user account that sponsored the host account may be included in the list of users.

According to an example embodiment, the video mediation method may further include identifying whether a preset termination condition for the main session is satisfied, terminating the main session when the termination condition is satisfied, and upon termination of the main session, terminating the sub-session.

According to another aspect, there is provided a video mediation method performed in a host terminal, including transmitting and receiving a main video to and from at least one user terminal connected to the main session through the main session, selecting a user terminal set from among the at least one user terminal, to be connected together in a sub-session, and transmitting and receiving a sub-video to and from the user terminal set connected to the sub-session through the sub-session while being connected to the main session.

According to another aspect, there is also provided a video mediation method performed in a first user terminal, including transmitting and receiving a main video to and from a host terminal connected to a main session, through the main session, and while connected to the main session, through a sub-session established between the host terminal and the first user terminal, excluding a second user terminal not connected to the sub-session, and transmitting and receiving a sub-video to and from the host terminal.

Further, according to another aspect, there is provided a video mediating apparatus, as a server for mediating video between terminals, the apparatus including a transceiver, a memory for storing instructions and a processor, wherein the processor, connected to the transceiver and the memory, is configured to, between a host terminal and at least one user terminal, establish a main session for mediating a main video including a video transmitted from the host terminal to the at least one user terminal, mediate the main video through the main session, identify a user terminal set selected among the at least one user terminal, establish a sub-session for mediating a sub-video including a video transmitted from the host terminal to the user terminal set between the host terminal and the user terminal set while maintaining the main session, and mediate the sub-video through the sub-session while maintaining the main session.

Further, according to an example embodiment, the processor, in mediating the sub-video, may be configured to mediate the sub-video by prioritizing data transmitted and received through the sub-session while maintaining both output of data transmitted and received through the main session and output of data transmitted and received through the sub-session, and control the host terminal to display at least a portion of data transmitted and received through the main session on a display area of the host terminal participating in the sub-session.

Further, according to an example embodiment, the processor, in mediating the main video, may be configured not to display at least a portion of data transmitted and received through the sub-session for the user terminal not participating in the sub-session, and to control the user terminal not participating in the sub-session so that data indicating that the sub-session is being maintained is displayed on a display area of the user terminal not participating in the sub-session.

Further, according to an example embodiment, the processor, in identifying the user terminal set, may be configured to receive, from the host terminal, an input for selecting a user profile displayed on a display area of the host terminal, identify whether a user account corresponding to the selected user profile is in a state capable of participating in a sub-session, when the user account is capable of participating in the sub-session, transmit a request to participate in the sub-session to a user terminal corresponding to the user account, and receive acceptance of the request to participate in the sub-session from the user terminal that received the request to participate in the sub-session.

Further, according to an example embodiment, the processor, in identifying the user terminal set, may be configured to receive, from the host terminal, an input for selecting a user account included in a list of users who applied for sub-video mediation, transmit a request to participate in a sub-session to a user terminal corresponding to the selected user account, receive acceptance of the request to participate in the sub-session from the user terminal that received the request to participate in the sub-session, wherein the list of users who applied for the sub-video mediation comprises a user account that sponsored a host account corresponding to the host terminal through the main session, and information on the user account that sponsored the host account may be included with the list of users.

According to an example embodiment, the processor may be configured to identify whether a preset termination condition for the main session is satisfied, terminate the main session when the termination condition is satisfied, and upon termination of the main session, terminate the sub-session.

Further, according to another aspect, there is provided a video mediating apparatus, as a host terminal that transmits and receives a video to and from a user terminal, the apparatus including an input/output interface, a transceiver, a memory for storing instructions and a processor, wherein the processor, being connected to the input/output interface, the transceiver and the memory, is configured to transmit and receive a main video to and from at least one user terminal connected to the main session through the main session, select a user terminal set from among the at least one user terminal, to be connected together in a sub-session, and transmit and receive a sub-video to and from the user terminal set connected to the sub-session through the sub-session while being connected to the main session.

Further, according to another aspect, there is provided a video mediating apparatus, as a first user terminal that transmits and receives a video to and from a host terminal, the apparatus comprising an input/output interface, a transceiver, a memory for storing instructions and a processor, wherein the processor, being connected to the input/output interface, the transceiver and the memory, is configured to transmit and receive a main video to and from a host terminal connected to a main session, through the main session, and while connected to the main session, through a sub-session established between the host terminal and the first user terminal, exclude a second user terminal not connected to the sub-session, and transmit and receive a sub-video to and from the host terminal.

Further, there may be provided a computer readable recording medium on which a program for performing a method according to the present disclosure is recorded.

Specific details of other example embodiments are included in the detailed description and drawings.

According to example embodiments, it is possible to activate the mediation of a sub-video by eliminating the need to disconnect an existing session from the perspective of a host or user by mediating a sub-video by establishing a sub-session while maintaining a main session for mediation of the main video, and it is possible to make participants intuitively recognize that communication through a sub-video is special to the participants participating in the sub-session by transmitting the sub-video to be distinct from the main video.

According to example embodiments, by inducing users who want to interact more intimately with the host to act as a sponsor within the video mediation platform, it is possible to improve the sales of the video mediation platform.

Additional features and advantages of the disclosure will be set forth in the description which follows, and in part will be apparent from the description, or may be learned by practice of the disclosure. The objectives and other advantages of the disclosure will be realized and attained by the structure particularly pointed out in the written description and claims hereof as well as the appended drawings.

### BRIEF DESCRIPTION OF THE DRAWINGS

These and/or other aspects, features, and advantages of the disclosure will become apparent and more readily appreciated from the following description of example embodiments, taken in conjunction with the accompanying drawings of which:
FIG. 1 is a schematic configuration diagram illustrating an environment with a video mediating apparatus according to an example embodiment;
FIG. 2 is a block diagram illustrating a video mediating apparatus according to an example embodiment;
FIG. 3 is a block diagram illustrating a video mediating apparatus according to another example embodiment;
FIGS. 4a to 4c are exemplary views of a screen of a host terminal through which a main video is mediated, according to example embodiments;
FIGS. 5a to 5c are exemplary views of a screen of a user terminal through which a main video is mediated, according to example embodiments;
FIG. 6 is an exemplary view of a screen of a user terminal that received a request to participate in a sub-session according to an example embodiment;
FIGS. 7a to 7c are exemplary views of a screen of a host terminal showing that a request to participate in a sub-session is rejected according to example embodiments;
FIGS. 8a to 8c are exemplary views of a screen of a host terminal through which a sub-video is mediated, according to example embodiments;
FIGS. 9a and 9b are exemplary views of a screen of a user terminal that does not participate in a sub-session while the sub-session is maintained, according to example embodiments;
FIG. 10 is a flowchart illustrating a video mediation method in a server according to an example embodiment;
FIGS. 11 to 13 are flowcharts for explaining video mediation methods in a server according to example embodiments; and
FIG. 14 is a flowchart illustrating a video mediation method in a host terminal according to an example embodiment.

### DETAILED DESCRIPTION

Hereinafter, specific example embodiments are described with reference to the drawings. The following detailed description is provided for comprehensive understanding of the methods, apparatus, and/or systems described herein. However, the example embodiments are only for understanding and the present disclosure is not limited to the detailed description.

In describing the embodiments, when it is determined that a detailed description of the related known technology may unnecessarily obscure the gist of the disclosed embodiments, the detailed description will be omitted. In addition, the terms to be described later are terms defined in consideration of functions in the example embodiments of the present disclosure, which may vary according to intentions or customs of users and operators. Therefore, the definitions should be made based on the content throughout the present disclosure. The terms used in the detailed description are for the purpose of describing the embodiments only, and the terms should never be restrictive. Unless explicitly used otherwise, expressions in the singular include the meaning of the plural. In the present disclosure, expressions such as "include" or "comprise" are intended to refer to certain features, numbers, steps, acts, elements, some or a combination thereof, and the expressions should not be construed to exclude the presence or possibility of one or more other features, numbers, steps, acts, elements, or some or combinations thereof other than those described.

Terms used in the example embodiments are selected from currently widely used general terms when possible while considering the functions in the present disclosure. However, the terms may vary depending on the intention or precedent of a person skilled in the art, the emergence of new technology, and the like. Further, in certain cases, there are also terms arbitrarily selected by the applicant, and in the cases, the meaning will be described in detail in the corresponding descriptions. Therefore, the terms used in the present disclosure should be defined based on the meaning of the terms and the contents of the present disclosure, rather than the simple names of the terms.

Throughout the specification, when a part is described as "comprising or including" a component, it does not exclude another component but may further include another component unless otherwise stated. Furthermore, terms such as "... unit," "... group," and "... module" described in the specification mean a unit that processes at least one function or operation, which may be implemented as hardware, software, or a combination thereof. Unlike used in the illustrated embodiments, the terms may not be clearly distinguished in specific operations.

Expression "at least one of a, b and c" described throughout the specification may include "a alone," "b alone," "c alone," "a and b," "a and c," "b and c" or "all of a, b and c."

In the present disclosure, a "terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication device ensuring portability and mobility, and include (but is not limited to) any type of handheld wireless communication device, for example, a tablet PC, a smartphone, a communication-based terminal such as international mobile telecommunication (IMT), code division multiple access (CDMA), W-code division multiple access (W-CDMA), long term evolution (LTE), or the like.

In the following description, terms "transmission," "communication," "sending," "receiving" and other similar terms not only refer to direct transmission of a signal or information from one component to another component, but may also include transmission via another component.

In particular, to "transmit" or "send" a signal or information to an element may indicate a final destination of the signal or information, and may not imply a direction destination. The same is applied to in "receiving" a signal or information. In addition, in the present disclosure, when two or more pieces of data or information are "related," it indicates that when one piece of data (or information) is obtained, at least a part of the other data (or information) may be obtained based thereon.

Further, terms such as first and second may be used to describe various components, but the above components should be not limited by the above terms. The above terms may be used for the purpose of distinguishing one component from another component.

For example, without departing from the scope of the present disclosure, a first component may be referred to as a second component. Similarly, the second component may also be referred to as the first component.

In describing the example embodiments, descriptions of technical contents that are well known in the technical field to which the present disclosure pertains and that are not directly related to the present disclosure will be omitted. This is to more clearly convey the gist of the present disclosure without obscuring the gist of the present disclosure by omitting unnecessary description.

For the same reason, some elements are exaggerated, omitted or schematically illustrated in the accompanying drawings. In addition, the size of each element does not fully reflect the actual size. In each figure, the same or corresponding elements are assigned the same reference numerals.

Advantages and features of the present disclosure, and a method of achieving the advantages and the features will become apparent with reference to the example embodiments described below in detail together with the accompanying drawings. However, the present disclosure is not limited to the example embodiments disclosed below, and may be implemented in various different forms. The example embodiments are provided only so as to render the present disclosure complete, and completely inform the scope of the present disclosure to those of ordinary skill in the art to which the present disclosure pertains. The present disclosure is only defined by the scope of the claims. Like reference numerals refer to like elements throughout.

It will be understood that each block of a flowchart diagram and a combination of the flowchart diagrams may be performed by computer program instructions. The computer program instructions may be embodied in a processor of a general-purpose computer or a special purpose computer, or may be embodied in a processor of other programmable data processing equipment. Thus, the instructions, executed via a processor of a computer or other programmable data processing equipment, may generate a part for performing functions described in the flowchart blocks. To implement a function in a particular manner, the computer program instructions may also be stored in a computer-usable or computer-readable memory that may direct a computer or other programmable data processing equipment. Thus, the instructions stored in the computer usable or computer readable memory may be produced as an article of manufacture containing an instruction part for performing the functions described in the flowchart blocks. The computer program instructions may be embodied in a computer or other programmable data processing equipment. Thus, a series of operations may be performed in a computer or other programmable data processing equipment to create a computer-executed process, and the computer or other programmable data processing equipment may provide steps for performing the functions described in the flowchart blocks.

Additionally, each block may represent a module, a segment, or a portion of code that includes one or more executable instructions for executing a specified logical function(s). It should also be noted that in some alternative implementations the functions recited in the blocks may occur out of order. For example, two blocks shown one after another may be performed substantially at the same time, or the blocks may sometimes be performed in the reverse order according to a corresponding function.

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein.

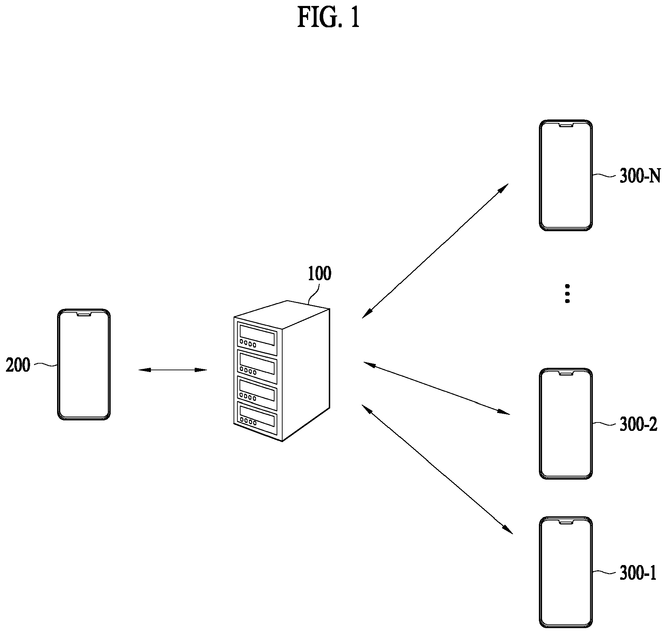

FIG. 1 is a schematic configuration diagram illustrating an environment including a video mediating apparatus according to an example embodiment. Referring to FIG. 1, the environment in which the video mediating apparatus operates includes a server 100, a host terminal 200 and one or more user terminals 300-1, 300-2, ..., and 300-N. In the present disclosure, the term 'environment' broadly means a system for video transmission, and for each device that constitutes the system, means the setting environment of a video session in which each device is involved. Even though FIG. 1 illustrates three or more user terminals, it is for the convenience of understanding. According to an example embodiment, the number of user terminals may be one or two, or may be set to be three or more than three. Meanwhile, it can be understood by those of ordinary skill in the art related to the present disclosure that other general-purpose components may be further included in addition to the components illustrated in FIG. 1.

The server 100 may receive data from at least one of the host terminal and one or more user terminals 300-1, 300-2, ..., and 300-N, and may perform an operation using the received data. Further, the server 100 may transmit the operation result to at least one of the host terminal and one or more user terminals 300-1, 300-2, ..., and 300-N.

The server 100 may receive a video mediation request from at least one of the host terminal 200 and one or more user terminals 300-1, 300-2, ..., 300-N. The server 100 may select a terminal which is a target for video mediation, among the host terminal 200 and one or more user terminals 300-1, 300-2, ..., and 300-N.

The server 100 may mediate a connection between selected terminals. For example, the server 100 may transmit connection information for one terminal from among the selected terminals to another terminal. According to an example embodiment, the connection information for the terminal may include an IP address or a port number of the corresponding terminal.

When the connection mediation attempt by the server 100 is successful, a session for video mediation, such as but not limited to a video call, may be established between the selected terminals. Each selected terminal may transmit a video or sound, which may include data such as but not limited to video call data and/or audio data from each respective terminal, through the established session. Specifically, one terminal may encode a video or audio into a digital signal, and transmit the encoded result to a counterpart terminal, and the counterpart terminal may decode the received video or sound.

Meanwhile, the server 100, the host terminal 200, and one or more user terminals 300-1, 300-2, ..., 300-N may communicate with each other through a connected communication network or communicate with other external devices. The communication network includes a local area network (LAN), a wide area network (WAN), a value added network (VAN), a mobile radio communication network, a satellite communication network, and combinations thereof. The communication network is a data communication network in a comprehensive sense that enables the constituent entities shown in FIG. 1 to communicate smoothly with each other, and may include a wired Internet, a wireless Internet, and a mobile wireless communication network. Examples of wireless communication may include wireless LAN (Wi-Fi), Bluetooth, Bluetooth low energy, ZigBee, Wi-Fi direct (WFD), ultra wideband (UWB), infrared data association (IrDA) and near field communication (NFC), but is not limited thereto.

In relation to the above, it will be described in more detail with reference to the following drawings.

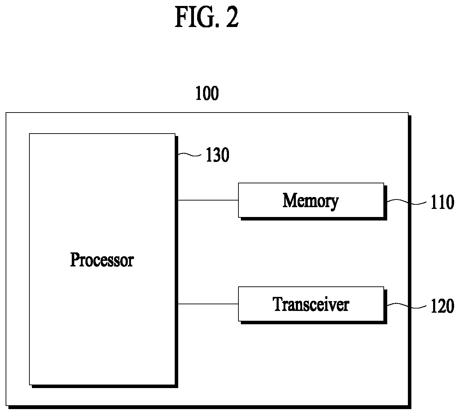

FIG. 2 is a block diagram illustrating a video mediating apparatus, for example the server 100 of FIG. 1, according to an example embodiment. Referring to FIG. 2, the video mediating apparatus according to the example embodiment includes a memory 110 for storing instructions, a transceiver 120 and a processor 130. The transceiver 120 may receive a video mediation request from at least one terminal. Here, a terminal requesting the video mediation may perform substantially the same operation as the host terminal 200 or the user terminals 300-1, 300-2, ..., and 300-N. Further, the video mediating apparatus according to the example embodiment may be configured to use the server 100 described above with reference FIG. 1.

The processor 130 may be connected to the memory 110 and the transceiver 120. Between the host terminal 200 and at least one of the user terminals 300-1, 300-2, ..., and 300-N, the processor 130 may establish a main session for mediating a main video including a video, or video data, transmitted from the host terminal 200 to the user terminals 300-1, 300-2, ..., and 300-N. The processor 130 may mediate the main video through the main session and identify a user terminal set selected among the at least one user terminals 300-1, 300-2, ..., and 300-N. The processor 130 may establish a sub-session for mediating a sub-video including a video, or video data, transmitted from the host terminal 200 to the user terminal set, between the host terminal 200 and the user terminal set while maintaining the main session, and the processor 130 may mediate the sub-video through the sub-session while maintaining the main session.

In the present disclosure, the main session is a session for video mediation having a 1:N, or M:N structure (M represents the host and N represents the user), and mediation of the main video by the main session may be performed in the form of live streaming. However, in addition to the live streaming, according to an example embodiment, the main session may be transmitting a recorded video.

Further, the sub-session is a session for video mediation of a 1:1 or 1:X (X<N) structure, and a terminal to be the target of sub-video mediation by the sub-session may be determined by the selection of the host terminal after a user terminal applies for sub-video mediation. Alternatively, the terminal to be the target of sub-video mediation may be determined by the selection of the host terminal without application of a user terminal. The sub-session in the present disclosure is a session that is subordinate to the main session. The sub-session may be a video call separate and parallel to the main session. A video mediating apparatus according to an example embodiment of the present disclosure may encourage a host and users to use more various video services by relationally and adaptively controlling data transmitted through a main session and data transmitted through sub-sessions.

Meanwhile, in the present disclosure, user accounts corresponding to each of the user terminals 300-1, 300-2, ..., and 300-N may be classified as a guest account or a viewer account. A "guest account" refers to an account of a user whose video is displayed on an additional window separately from the host's video when the main video is transmitted among the users participating in the main session. A "viewer account" refers to an account other than the guest account among the users participating in the main session. Therefore, all user accounts may be viewer accounts, or there may be included at least one guest account.

According to an example embodiment, in mediating a sub-video through a sub-session, the processor 130 may control terminals participating in the sub-session so that a separate modal window for transmitting the sub-video is displayed on screens of the terminals participating in the sub-session.

According to an example embodiment, the processor 130 may identify whether a preset termination condition for the main session is satisfied. If the termination condition is satisfied, the processor 130 may terminate the main session, and may terminate the sub-session according to the termination of the main session. For example, the processor 130 may terminate the main session, and thus also the sub-session, if (1) the host account reports all user accounts participating in the main session, or sends all user accounts out from the main session, (2) the host terminal 200 participating in the main session disconnects from the main session, or (3) all user terminals participating in the main session disconnect from the main session. However, the termination condition for the main session is not limited thereto, and may be set in various ways according to example embodiments.

According to an example embodiment, the processor 130 may identify whether a preset termination condition for a sub-session is satisfied, and if the termination condition is satisfied, the processor 130 may terminate the sub-session. For example, the processor 130 may terminate the sub-session if (1) the host account reports all user accounts participating in the sub-session or sends all user accounts out from the sub-session, (2) the host terminal 200 participating in the sub-session disconnects from the corresponding sub-session (for example, by selecting an interface corresponding to the sending out function in the window through which the sub-video is transmitted), or (3) all user terminals participating in the sub-session disconnect from the sub-session. However, the termination condition for the sub-session is not limited thereto, and may be set in various ways according to example embodiments.

According to an example embodiment, in mediating a sub-video, in a state in which both output of data transmitted/received through the main session and output of data transmitted/received through the sub-session are maintained, the processor 130 may preferentially mediate data transmitted/received through the sub-session. For example, when video information transmitted to the host terminal 200 through the main session and video information transmitted to the host terminal 200 through the sub-session are to be output in the same display area of the screen of the host terminal 200, the processor 130 may mediate the videos so that the video information (that is, information of the sub-video) transmitted to the host terminal 200 through the sub-session is preferentially displayed. However, it may not only be that the processor 130 selects one of the two pieces of output data only when the output of data transmitted/received through the main session and the output of data transmitted/received through the sub-session overlap in time and space. The processor 130 may preferentially mediate the output of data transmitted/received through the sub-session while the sub-session is maintained even if the two pieces of output data do not overlap.

According to an example embodiment, in mediating the sub-video, the processor 130 may control the host terminal 200 to display at least a portion of data transmitted/received through the main session on a display area of the host terminal 200 participating in the sub-session. For example, on the display area of the host terminal 200 participating in the sub-session, the processor 130 may control the host terminal 200 in order to display chat information, sponsorship-related information, time-related information, control right-related information and/or user-related information transmitted/received through the main session. As an example of the sponsorship-related information, the host may receive sponsorship from a user who is participating in the main session even while the sub-video is being mediated, and in this regard, the host may directly receive information such as the amount of money for the sponsorship, information of the user who made the sponsorship, and the sponsorship item. Accordingly, the host may identify specific data obtained through the main session through the display area of the host terminal 200 even while participating in the sub-session, and thus the host may recognize and respond to matters that occur in mediation of the main video.

According to an example embodiment, in mediating the main video, while the sub-session being maintained, for user terminals that do not participate in the sub-session, the processor 130 may control the user terminals not participating in the sub-session so as not to display at least a portion of data transmitted/received through the sub-session. Alternatively, the processor 130 may control the user terminals not participating in the sub-session so that data indicating that the sub-session is being maintained is displayed on the display areas of the user terminals not participating in the sub-session. For example, the processor 130 may control the user terminals not participating in the sub-session so that one or more modal windows indicating that the sub-session is being maintained are displayed on the display areas of the user terminals not participating in the sub-session. For another example, with regard to user terminals not participating in the sub-session, the processor 130 may control the user terminals not participating in the sub-session in order to hide the interface indicating the guest waiting status that was previously displayed on the screens where the main video is transmitted, and to display a modal window indicating that the sub-session is being maintained in the corresponding areas. With regard to this, if the host account and the guest account are participating in each other's sub-session, the processor 130 may hide the interface indicating the guest waiting status on the screens of the user terminals not participating in the sub-session.

According to an example embodiment, in mediating the main video, the processor 130 may control the host terminal 200 and the user terminals 300-1, 300-2, ..., and 300-N, in order to ensure that information reports or sanctions imposed on the host account or a user account participating in the sub-session through the sub-session while the sub-session is being mediated is applied effectively in the mediation environment of the main video.

According to an example embodiment, in mediating the main video, the processor 130 may provide content independent of data transmitted/received through the sub-session to the user terminals not participating in the sub-session, while the sub-session is being maintained. For example, to the user terminals not participating in the sub-session, the processor 130 may provide content for requesting sponsorship of the host account, provide an expanded chatting area on a screen where the main video is transmitted, provide host-related content (for example, a pre-recorded host's video, previously taken pictures of the host, etc.) or game content, on the screen on which the main video is transmitted. For another example embodiment, the processor 130 may delegate temporary authority to a guest account in an environment in which the main video is transmitted while a sub-session is maintained, and the guest account to which the temporary privilege has been delegated may temporarily have at least some of the privileges of the host account.

According to an example embodiment, in identifying a user terminal set, the processor 130 may receive, from the host terminal 200, an input for selecting a user profile displayed on the display area of the host terminal 200, and may identify whether a user account corresponding to the selected user profile is in a state capable of participating in the sub-session. When the user account is in a state capable of participating the sub-session, the processor 130 may transmit a request to participate in the sub-session to the user terminal corresponding to the user account, and receive acceptance of the request to participate in the sub-session from the user terminal that received the request to participate in the sub-session. With regard to this, the criteria for the processor 130 to determine whether the user account is in a state capable of participating in the sub-session may include determining (1) whether the user terminal is currently connected to the main session and (2) whether the user account is under restrictions due to sanctions or reporting. However, the criterion is not limited thereto.

According to an example embodiment, in identifying a user terminal set, the processor 130 may receive, from the host terminal 200, an input for selecting a user account included in a list of users who have applied for sub-video mediation, may transmit a request to participate in the sub-session to the user terminal corresponding to the selected user account, and may receive acceptance for the participation request from the user terminal that received the participation request. Here, the list of users who have applied for sub-video mediation may include (1) a user account that has sponsored a host account corresponding to the host terminal 200 through the main session, and (2) information regarding sponsorship of the host account by the user account included in the user list, and in the list, user accounts included in the user list may be sorted based on a figure related to sponsorship for the host account. For example, user accounts in the user list may be sorted in descending order based on figures related to sponsorship, so that user accounts that sponsored more may be displayed at the top of the user list. With regard to this, for example, a "sponsorship value" may be determined in proportion to the price of the sponsored item sent by a user account to the host account. Through this, since the host participates in the sub-session while recognizing the details of each user's sponsorship in advance, the host may maintain a sub-session with each user at an appropriate time, and users who want to participate in a sub-session would more actively support the host, and thus the profit of the video mediation service platform may be increased. Meanwhile, when a user terminal to which the processor 130 transmitted a participation request is not currently connected to the main session, the processor 130 may stop the process of requesting the user terminal to participate in a sub-session, regardless of whether the user terminal accepts the participation request or not, and may transmit a message informing the host terminal 200 that the participation request process has been stopped.

According to an example embodiment, when a preset sponsorship condition is satisfied by a user account participating in the main session, the processor 130 may stop mediation of a sub-video through the sub-session for a preset period of time. In this case, the host terminal may transmit a video and provide ancillary content to user terminals participating in the main session by using the processing authority in an environment where the main video is mediated through the main session.

According to an example embodiment, when a sub-video is mediated 1: 1, the processor 130 may determine the order of each user terminal to participate in a sub-session based on the order in which each of a plurality of user terminals wishing to participate in a sub-session applied to participate in a sub-session.

According to an example embodiment, the processor 130 may later determine a usage amount charged to a user terminal according to participation in a sub-session, but the processor 130 may determine a usage amount in proportion to the time that each user terminal accesses a sub-session, and impose the determined usage amount on a user account corresponding to each user terminal.

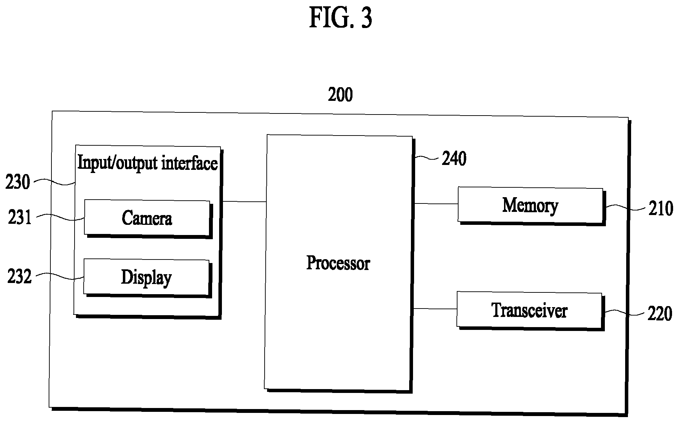

FIG. 3 is a block diagram illustrating a video mediating apparatus, such as the host terminal 200 or one of the user terminals 300-1, 300-2, ..., 300-N of FIG. 1, according to another example embodiment. Referring to FIG. 3, the video mediating apparatus according to the example embodiment includes a memory 210 for storing instructions, a transceiver 220, an input/output interface 230 and a processor 240. The transceiver 220 may transmit a video mediation request to the server 100, may receive a video or audio mediated from at least one terminal through the server 100, or may transmit a video or audio input to the corresponding video mediating apparatus to at least one terminal through the server 100. Further, the input/output interface 230 may input or output a video or audio received externally from the mediated video session.

### [HOST TERMINAL AS VIDEO MEDIATING APPARATUS]

A video mediating apparatus according to another example embodiment may be configured to use the host terminal 200 described above with reference to FIG. 1.

The processor 240 may be connected to the memory 210, the transceiver 220 and the input/output interface 230, and may transmit/receive a main video to and from at least one user terminal connected to the main session, through the main session. The processor 240 may select a user terminal set to be connected to a sub-session together among at least one user terminal, and may transmit/receive a sub-video to/from the user terminal set connected to the sub-session through the sub-session while being connected to the main session.

According to an example embodiment, the processor 240 may select a user terminal corresponding to a selected user profile among user profiles displayed on a display 232 of the host terminal 200 as a user terminal to be connected to a sub-session together.

According to another example embodiment, the processor 240 may select a user terminal corresponding to the selected user account from the user list displayed on the display 232 of the host terminal 200 as the user terminal to be connected to the sub-session together.

Further, according to an example embodiment, the processor 240 may register a host account as a service provider account on the video mediation service platform according to an input of a host through the input/output interface 230. In this case, the processor 130 of the server 100 may provide a list of host accounts registered as service provider accounts to unspecific user accounts, and accordingly, user accounts may participate in a main session of a host terminal corresponding to a corresponding host account in order to view a video of the desired host account.

Further, according to an example embodiment, the processor 240 may generate a service provider link that is movable to the video mediation environment of the host account according to an input of the host through the input/output interface 230, and may provide the service provider link on the video mediation service platform. When a user selects (for example, clicks) the corresponding link through the user's terminal, the processor 130 of the server 100 may connect the user account corresponding to the corresponding user terminal to the main session of the host account.

Further, according to an example embodiment, in transmitting and receiving a sub-video through a sub-session, without going through the server 100 as illustrated in FIG. 1, the processor 240 may establish a sub-session with a user terminal participating in the sub-session according to a peer-to-peer (P2P) communication method, and transmit/receive a sub-video. In this case, since the sub-session is not going through a separate intermediary server for transmitting and receiving a sub-video, there may be advantages in that latency according to data transmission/reception is short, data traffic burden is less, and resolution restrictions caused by an intermediary server may be avoided.

### [USER TERMINAL AS VIDEO MEDIATING APPARATUS]

Further, a video mediating apparatus according to another example embodiment may be configured to use the user terminals 300-1, 300-2, ..., and 300-N. Here, each of the user terminals 300-1, 300-2, ..., and 300-N may have a structure in which a memory, a transceiver and an input/output interface are connected to a processor, similar to the host terminal 200.

The processor may be connected to a memory, a transceiver and an input/output interface, and may transmit/receive a main video to/from a host terminal connected to a main session, through the main session. Being connected to the main session, through a sub-session established between the host terminal and a first user terminal, the processor may transmit/receive a sub-video to/from the host terminal, excluding a second user terminal not connected to the sub-session.

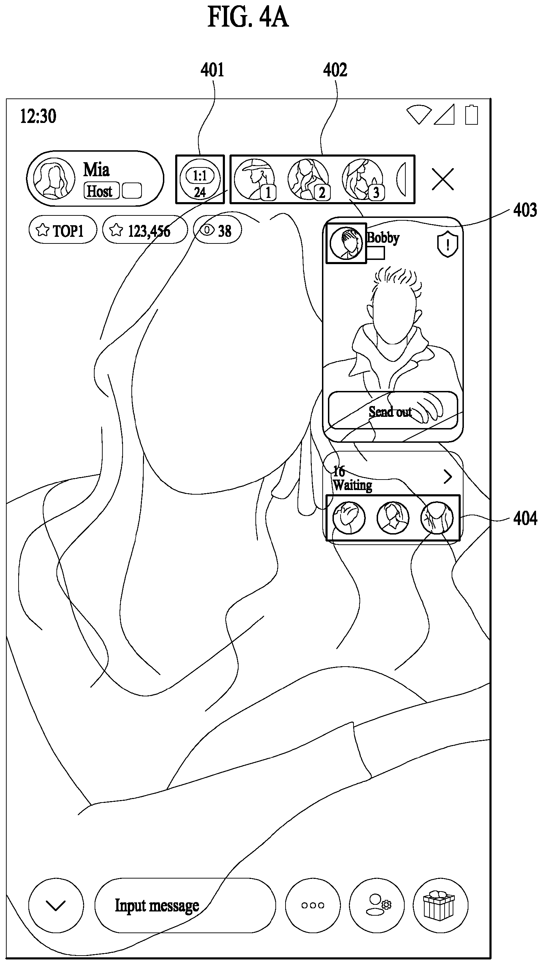

FIGS. 4a to 4c are exemplary views of a screen of a host terminal through which a main video is mediated, according to example embodiments.

### [WITH RESPECT TO FIG. 4a]

According to an example embodiment, the processor 130 of the server 100 may control the host terminal 200 so that a graphic object 401 representing the number of users who applied to participate in a sub-session of the current 1: 1 structure is displayed on the screen of the host terminal 200 on which the main video is displayed. However, the text "1:1" in the graphic object 401 illustrated in FIG. 4a may be changed to "1:N" according to a structure of a current sub-session. Graphic objects may include, for example but without limitation, at least one of text and/or an illustration.

According to an example embodiment, the processor 130 of the server 100 may cause the host terminal 200 to sequentially display user profiles 402 of user accounts corresponding to the highest rankings based on sponsorship values on the screen of the host terminal 200 on which the main video is displayed.

According to an example embodiment, the processor 130 may control terminals participating in the main session to transmit a guest's video through a window separate from the host's video in an environment where the main video is transmitted, and a user profile 403 of the guest may be displayed on a separate window.

According to an example embodiment, the processor 130 may control terminals participating in the main session to display an interface indicating the guest waiting status in an environment in which the main video is transmitted, and some of the user profiles 404 of user accounts waiting to become a guest may be displayed on the interface.

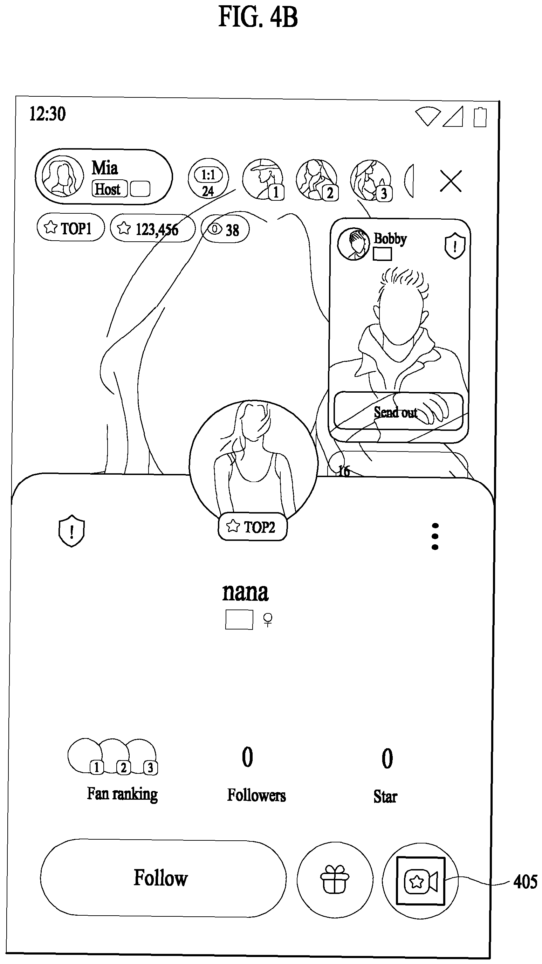

### [WITH RESPECT TO FIG. 4b]

According to an example embodiment, as any one of the user profiles 402, 403 and 404 illustrated in FIG. 4a is selected by the host terminal 200, the processor 130 may provide detailed profile information about a user account corresponding to a selected user profile to the host terminal 200 in one of various forms, such as but not limited to a pop-up window, a modal window, and/or a bottom sheet.

Specifically, the detailed profile information provided to the host terminal 200 may include at least one of a profile picture of a corresponding user account, a sponsorship ranking, a nickname, gender, nationality and/or the number of followers. In an area where detailed profile information is displayed (in the form of, for example, a pop-up window, a modal window and/or a bottom sheet), there may be additionally displayed at least one of a graphic object for the host account to select to follow the user account, a graphic object for the host account to present items to the user account, and a graphic object 405 for the host account to request the user account to participate in a sub-session.

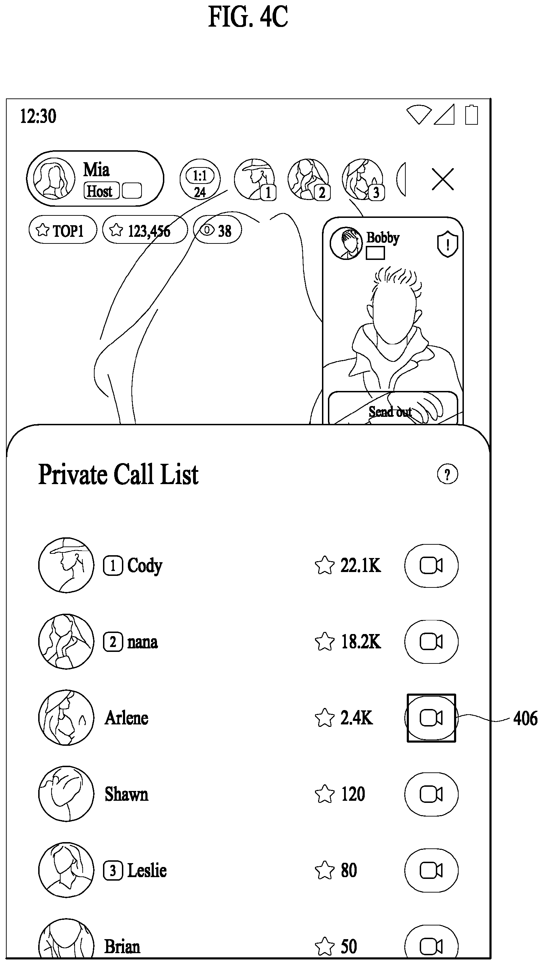

### [WITH RESPECT TO FIG. 4c]

According to an example embodiment, the processor 130 may control the host terminal 200 to display a list of users who have applied for sub-video mediation on the screen of the host terminal 200. Specifically, the user list may be displayed on the screen of the host terminal 200 as the graphic object 401 (as designated in Fig. 4A) representing the number of users who applied to participate in a sub-session is selected on the screen of the host terminal 200. Although the user list is provided in the form of a bottom sheet in FIG. 4c, it may be provided in various forms such as a pop-up window and a modal window.

Specifically, in the area where the user list is displayed, a graphic object 406 for the host account to request participation in a sub-session may be displayed for each user account.

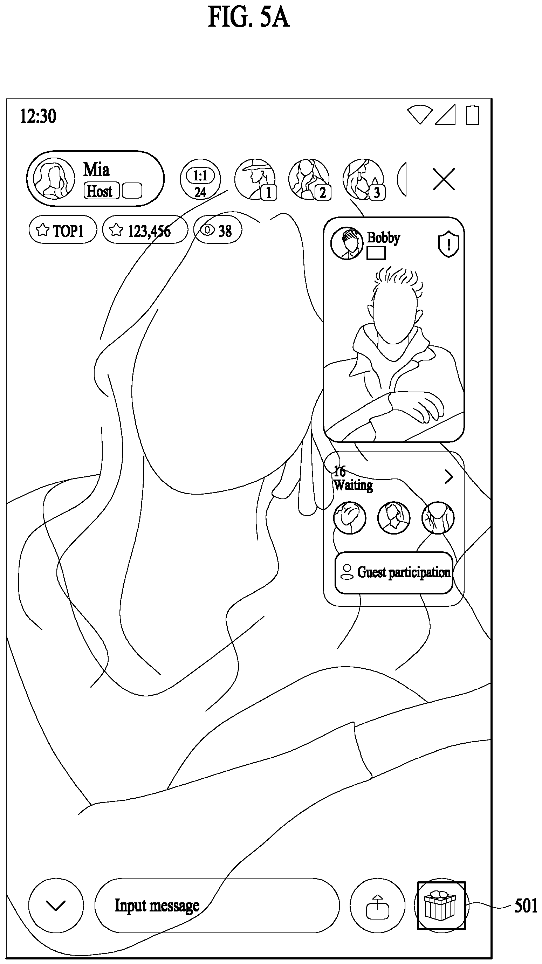

FIGS. 5a to 5c are exemplary views of a screen of a user terminal through which a main video is mediated, according to example embodiments.

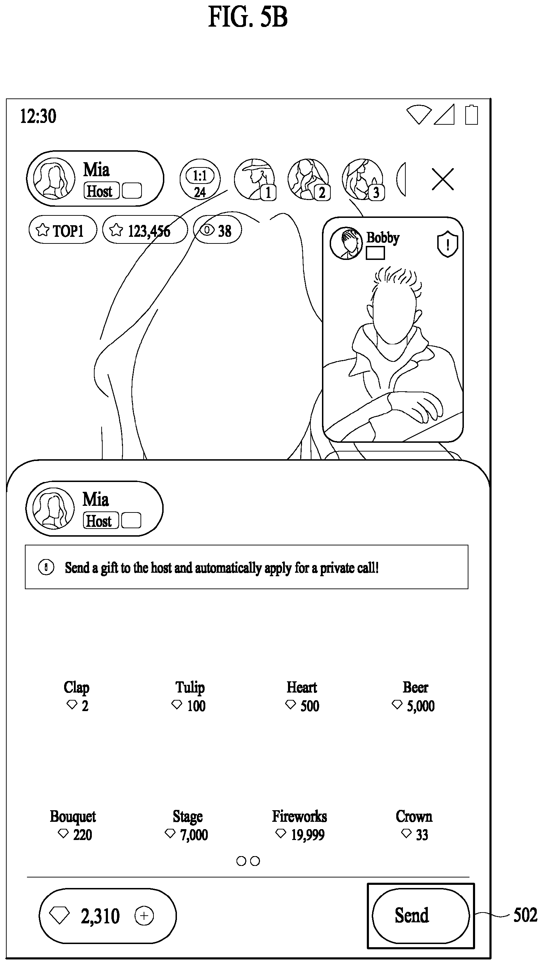

### [WITH RESPECT TO FIGS. 5a and 5b]

According to an example embodiment, the processor 130 may control a user terminal 300-1, 300-2, ... 300-N to display a graphic object 501 for the user account to support the host account on the screen of the user terminal on which a main video is displayed. More specifically, the graphic object 501 may perform a function of calling a separate window (such as a pop-up window, a modal window or a bottom sheet) through which an item to be sponsored to the host account may be selected.

As the corresponding graphic object 501 is selected by the user, the processor 130 may control the user terminal so that a separate window for selecting an item to be sponsored to the host account is displayed on the screen of the user terminal. A name of each item and an amount required to purchase each item (the amount may be displayed in real currency units such as Korean won or US dollars, or it may be displayed in currency units commonly used within the video mediation service platform) may be displayed in the corresponding window.

As an item to sponsor is selected by the user and a graphic object 502 that determines sponsorship of the item within that window is selected, the processor 130 may charge an amount of money for the selected item to the user account and generate the selected item in the name of the host account.

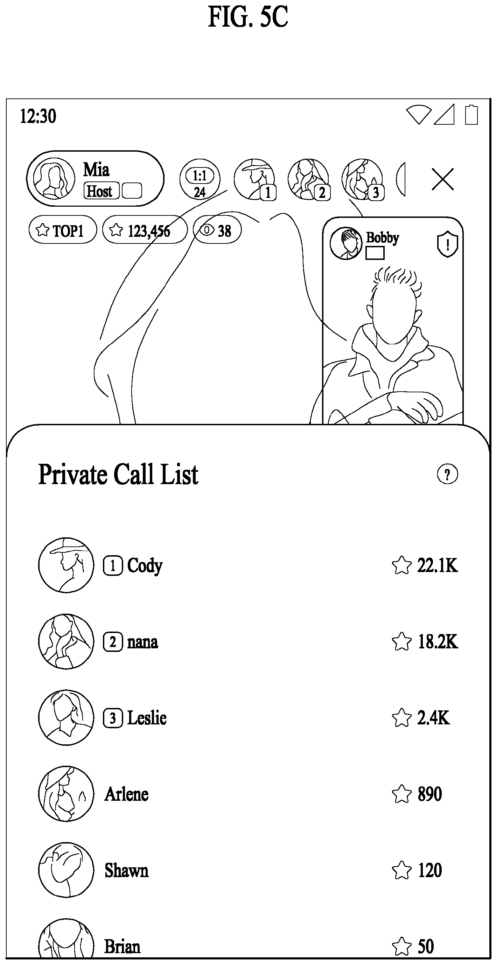

### [WITH RESPECT TO FIG. 5c]

According to an example embodiment, as the host account is sponsored, the processor 130 may sort users in a list who have applied for sub-video mediation based on figures regarding sponsorship (in FIG. 5c, indicated by the number of stars). FIG. 5c illustrates that a user account with the nickname "Cody" ranks first, a user account with the nickname "nana" ranks second and a user account with the nickname "Leslie" ranks third. Through this, the host may be interested in a user who sponsored at a high amount and consider the user as a target of sub-video mediation, and thus a motivation for sponsorship may be provided to users.

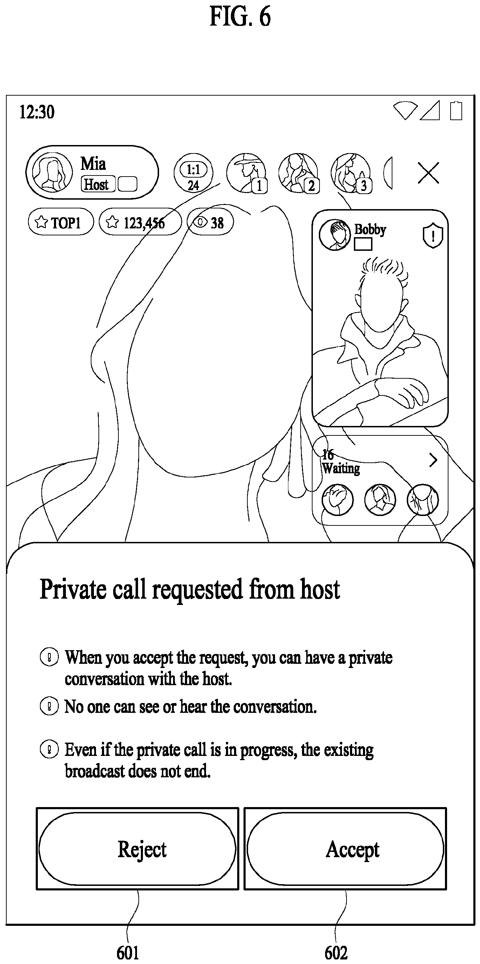

FIG. 6 is an exemplary view of a screen of a user terminal that received a request to participate in a sub-session according to an example embodiment.

According to an example embodiment, on a screen of a user terminal receiving a request to participate in a sub-session from the host terminal 200, the processor 130 may control the user terminal to display a separate window (such as a pop-up window, a modal window or a bottom sheet) for identifying whether the participation request is accepted.

Specifically, on a separate window for identifying whether to accept the participation request, guide information related to sub-video mediation (corresponding to, for example, the text sentences illustrated in FIG. 6) and options 601 and 602 for selecting whether to accept the participation request may be displayed.

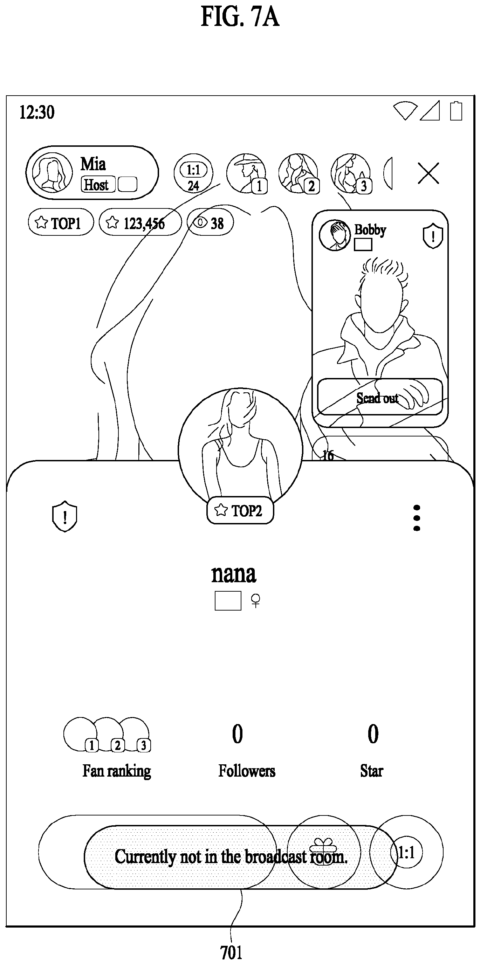

FIGS. 7a to 7c are exemplary views of a screen of a host terminal in which a request to participate in a sub-session is rejected according to example embodiments.

### [WITH RESPECT TO FIG. 7a]

According to an example embodiment, if a user account that is the target of the request to participate in a sub-session is not currently accessing the main session, the processor 130 may control the host terminal 200 so that a separate modal window 701 is displayed on the screen of the host terminal 200 to inform that the corresponding user account is not currently accessing the main session.

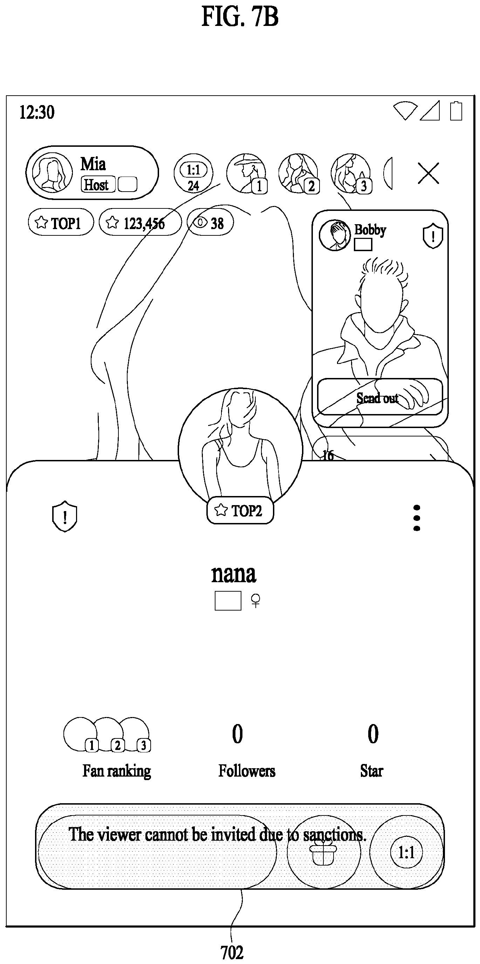

### [WITH RESPECT TO FIG. 7b]

According to an example embodiment, if the user account that is the target of the participation request for a sub-session is unable to participate in a sub-session due to current sanctions, the processor 130 may control the host terminal 200 to display a separate modal window 702 on the screen of the host terminal 200 to inform that the corresponding user account cannot currently participate in a sub-session.

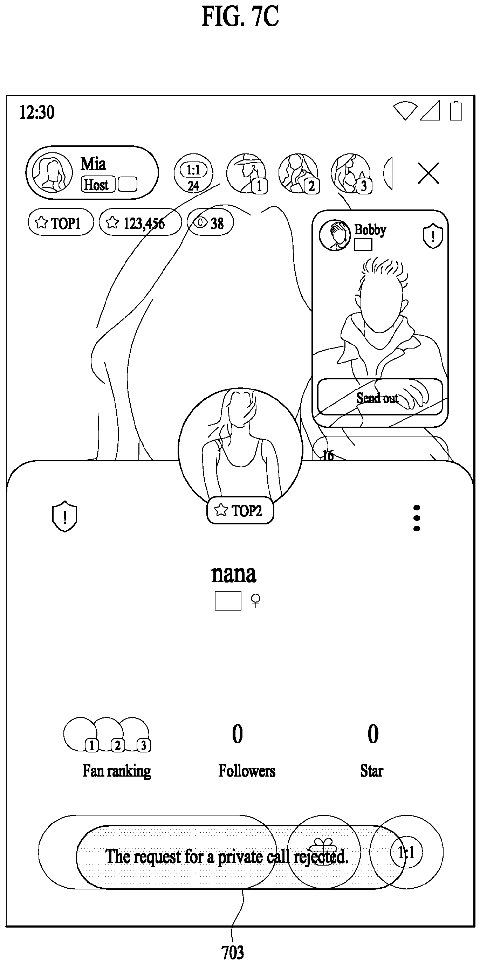

### [WITH RESPECT TO FIG. 7c]

According to an example embodiment, if the user account that is the target of the request to participate in a sub-session declines to participate, the processor 130 may control the host terminal 200 so that a separate modal window 703 is displayed on the screen of the host terminal 200 to inform that the user account rejected participation in a sub-session.

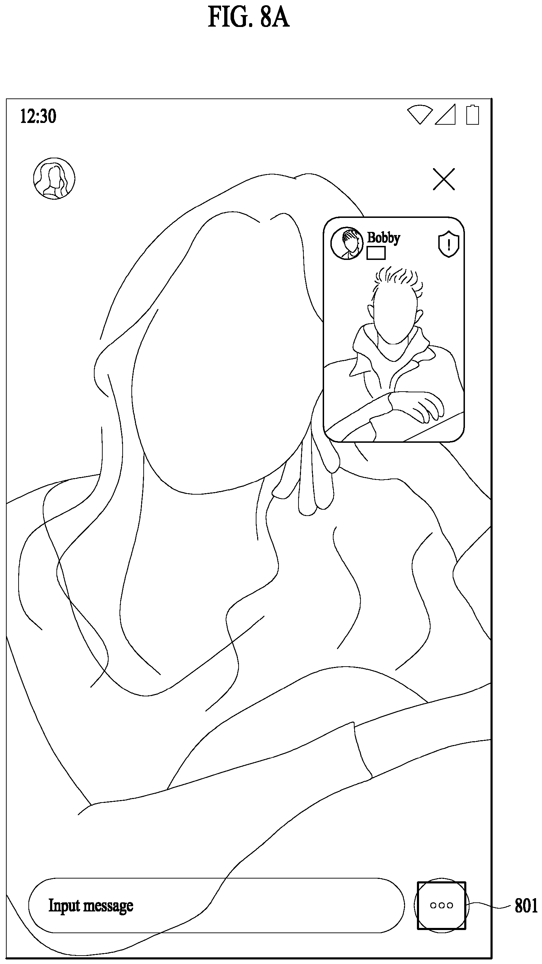

FIGS. 8a to 8c are exemplary views of a screen of a host terminal through which a sub-video is mediated, according to example embodiments.

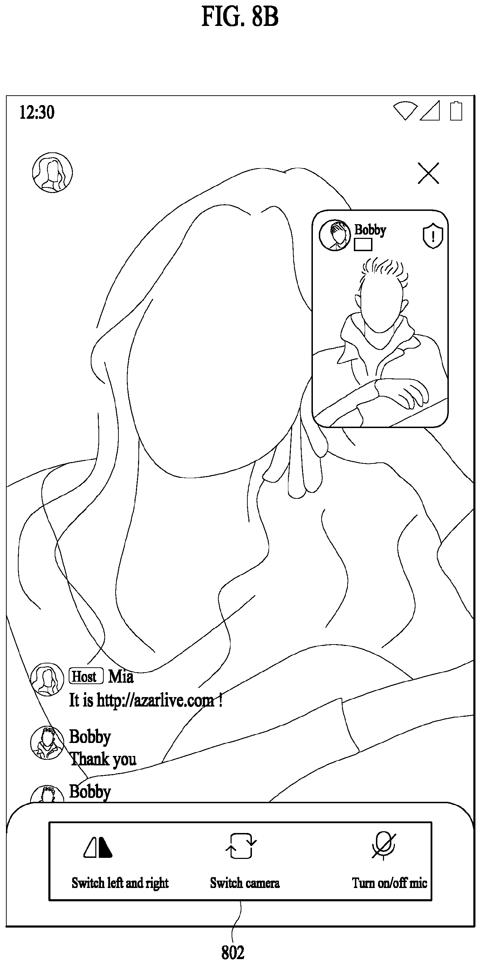

### [WITH RESPECT TO FIGS. 8a and 8b]

According to an example embodiment, the processor 130 may control the host terminal 200 so that a window (for example, a modal window) for sub-video mediation is displayed on the screen of the host terminal 200 participating in a sub-session separately from the window in which the main video is mediated.

According to an example embodiment, the processor 130 may control the host terminal 200 so that a screen of a user participating in a sub-session is displayed on a part of an area where the window for sub-video mediation is displayed. Likewise, to a user terminal participating in the sub-session, the processor 130 may control the user terminal so that the screen of the host participating in the sub-session is displayed in a part of an area where a window for sub-video mediation is displayed. In other words, on the screen of the user terminal, in addition to the user's own video, the screen of the host in which the video is being transmitted/received through a separate window may be displayed.

According to an example embodiment, as the host terminal 200 or the user terminal selects a setting object 801 displayed on the window for sub-video mediation, the processor 130 may provide options 802 for setting the environment for sub-video mediation in a separate window on the corresponding window.

Specifically, the provided options 802 may include an option to switch the left and the right of the sub-video symmetrically (for example, "Switch left and right"), an option to switch a camera to another camera of the terminal to which an external video is input (for example, "Switch camera") and an option to switch the microphone on/off of the terminal to which the external voice is input (for example, "Turn on/off mic").

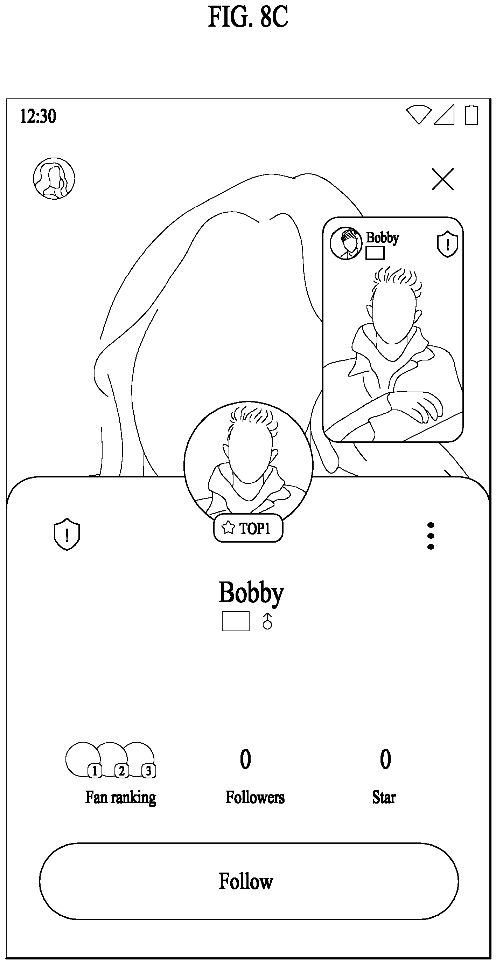

### [WITH RESPECT TO FIG. 8c]

According to an example embodiment, as the user profile displayed on the window for sub-video mediation is selected by the host terminal 200, the processor 130 may provide detailed profile information of the user account corresponding to the selected user profile to the host terminal 200 in the form of, for example, a pop-up window, a modal window and/or a bottom sheet.

Specifically, the detailed profile information provided to the host terminal 200 may include at least one of a profile picture of a corresponding user account, a sponsorship ranking, a nickname, gender, nationality and/or the number of followers. In an area where detailed profile information is displayed (for example, a pop-up window, a modal window or a bottom sheet), a graphic object for the host account to select to follow the user account may be additionally displayed.

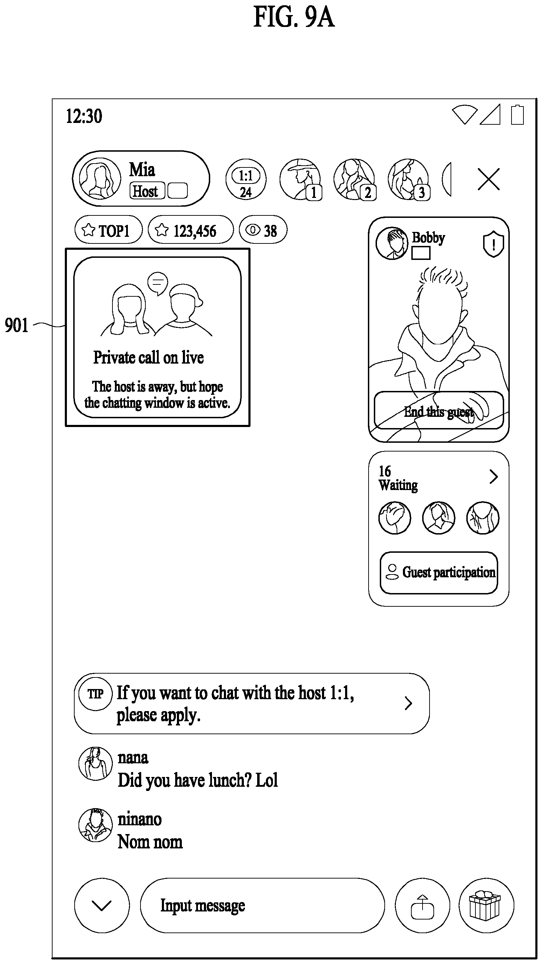

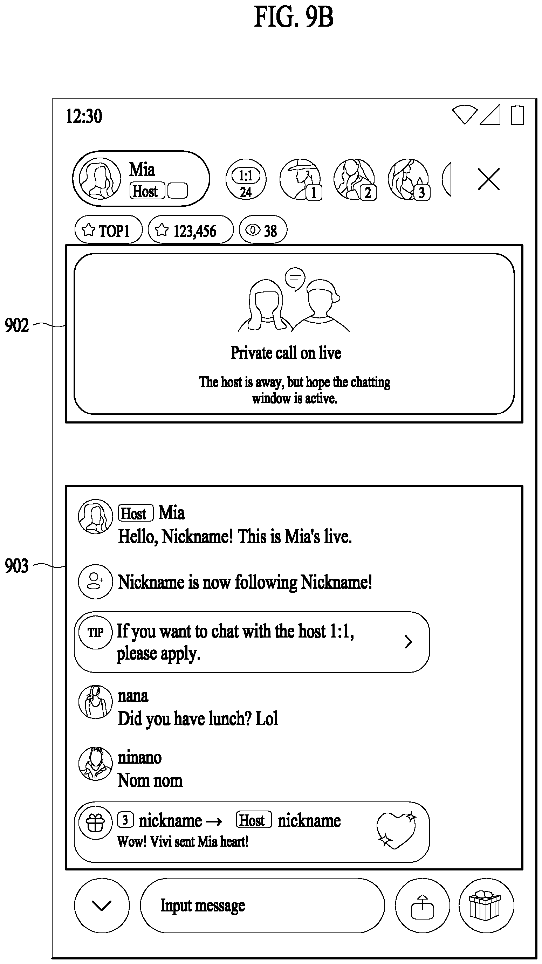

FIGS. 9a and 9b are exemplary views of a screen of a user terminal that does not participate in a sub-session while the sub-session is maintained, according to example embodiments.

According to an example embodiment, the processor 130 may control the user terminal not participating in the sub-session so that a modal window 901 indicating that the sub-session is being maintained is displayed on a screen of the user terminal not participating in the sub-session.

According to another example embodiment, the processor 130 may control the user terminal not participating in the sub-session in order to hide the interface indicating the guest waiting status that was previously displayed (for example, a modal window showing the guest waiting status illustrated in FIG. 9a) and to display a modal window 902 indicating that the sub-session is being currently maintained, for the user terminal not participating in the sub-session.

According to another example embodiment, the processor 130 may control a user terminal that does not participate in the sub-session so that a chat area 903, which is an expanded area compared to the chat area previously displayed on the screen to which the main video is transmitted, is displayed on the user terminal not participating in the sub-session.

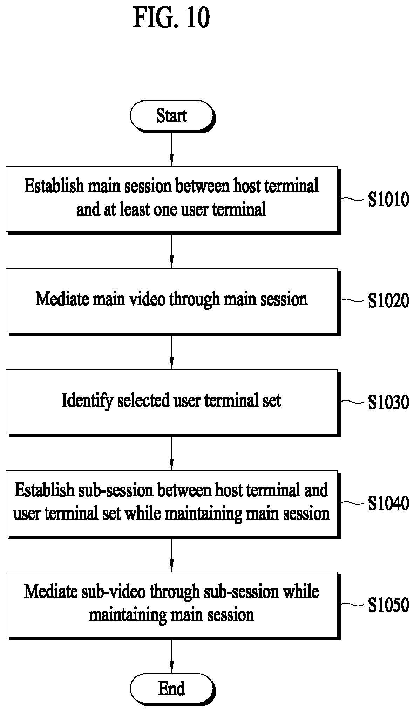

FIG. 10 is a flowchart illustrating a video mediation method in a server according to an example embodiment. The method described in FIG. 10 may be performed, for example, by the server 100 above-described.

In operation S 1010, between the host terminal 200 and at least one of the user terminals 300-1, 300-2, ..., and 300-N, the server 100 establishes a main session for mediating a main video including a video transmitted from the host terminal 200 to a user terminal.

In operation S1020, the server 100 mediates the main video through a main session.

In operation S1030, the server 100 identifies a user terminal set selected from among at least one of the user terminals 300-1, 300-2, ..., and 300-N.

In operation S1040, while maintaining the main session, the server 100 establishes a sub-session for mediating a sub-video including a video transmitted from the host terminal 200 to the user terminal set between the host terminal 200 and the user terminal set.

In operation S1050, the server 100 mediates the sub-video through the sub-session while maintaining the main session.

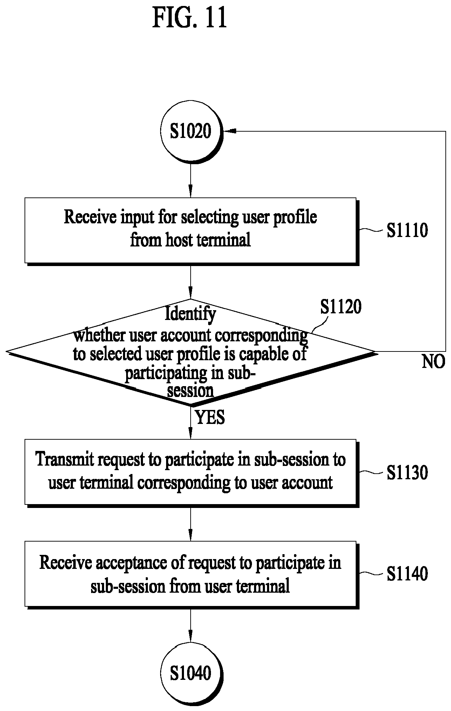

FIGS. 11 to 13 are flowcharts for explaining video mediation methods in a server according to example embodiments. The methods described in FIGS. 11 to 13 may be performed, for example, by the server 100 above-described.

FIG. 11 relates to an example embodiment in which a user terminal to participate in a sub-session is determined according to the host terminal 200 selecting a user profile.

In operation S1110, the server 100 receives, from the host terminal 200, an input for selecting a user profile displayed on the display area of the host terminal 200.

In operation S1120, the server 100 identifies whether the user account corresponding to the selected user profile is in a state capable of participating in a sub-session.

In operation S1130, when the user account corresponding to the selected user profile is in a state capable of participating in a sub-session, the server 100 transmits a request to participate in a sub-session to the user terminal corresponding to the user account.

In operation S1140, the server 100 receives acceptance of the request to participate in a sub-session from the user terminal that received the participation request.

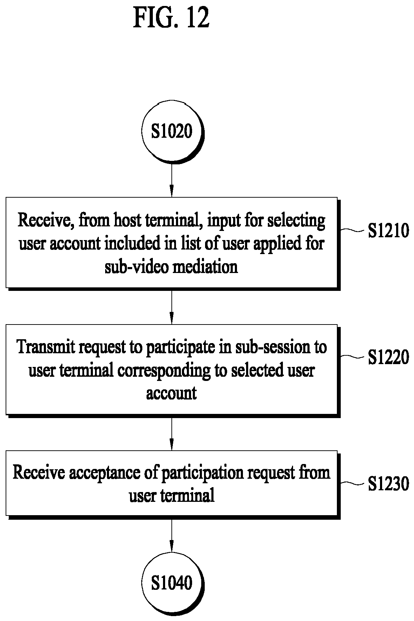

Further, FIG. 12 is a flowchart of an example embodiment of determining a user terminal to participate in a sub-session according to a selection from a user list of the host terminal 200.

In operation S1210, the server 100 receives, from the host terminal 200, an input for selecting a user account included in a list of users who have applied for sub-video mediation.

In operation S1220, the server 100 transmits a request to participate in a sub-session to the user terminal corresponding to the selected user account.

In operation S1230, the server 100 receives acceptance of the participation request from the user terminal that received the request to participate in a sub-session.

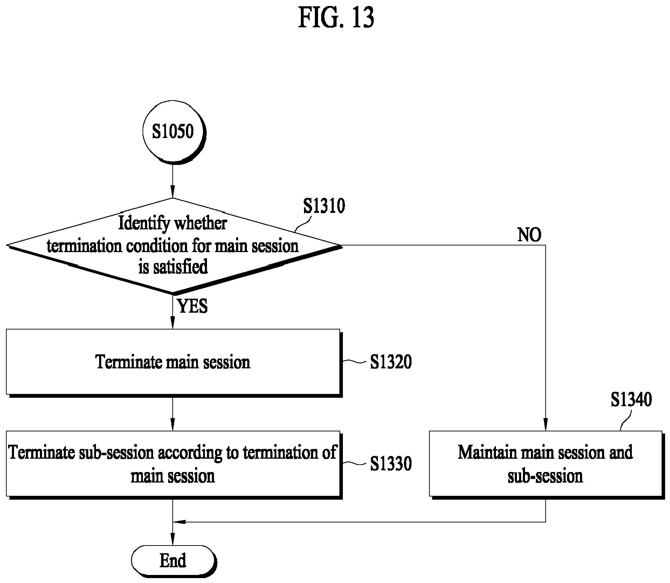

Further, FIG. 13 is a flowchart related to an example embodiment in which a sub-session is also terminated in accordance with the termination of the main session.

In operation S1310, the server 100 identifies whether a preset termination condition for the main session is satisfied.

In operation S1320, the server 100 terminates the main session when a preset termination condition is satisfied.

In operation S1330, the server 100 terminates the sub-session according to the termination of the main session.

Further, in operation S1340, the server 100 maintains the main session and the sub-session when the preset termination condition is not satisfied.

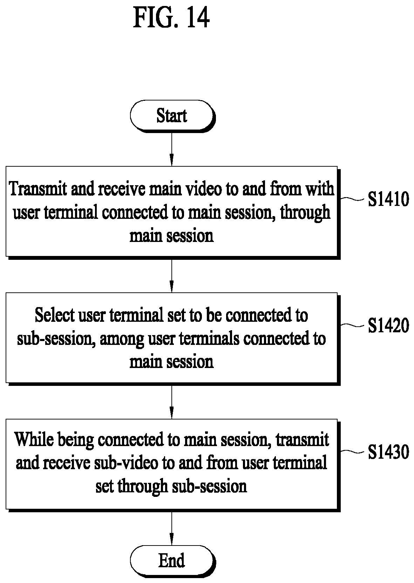

FIG. 14 is a flowchart illustrating a video mediation method in a host terminal according to an example embodiment. The method described in FIG. 14 may be performed, for example, by the host terminal 200 above-described.

In operation S1410, the host terminal 200 transmits and receives a main video to and from with at least one of the user terminals 300-1, 300-2, ..., and 300-N connected to the main session, through the main session.

In operation S1420, the host terminal 200 selects a user terminal set to be connected to the sub-session together, among at least one of the user terminals 300-1, 300-2, ..., and 300-N.

In operation S1430, while being connected to the main session, the host terminal 200 transmits/receives sub-videos to and from the user terminal set connected to the sub-session, through the sub-session.

In the above flowchart, the method is described by being divided into the plurality of operations. However, at least some operations may be performed in a reversed order, may be performed in combination with other operations, may be omitted, may be performed by being divided into more detailed operations, or may be performed by adding one or more operations not illustrated.

The electronic device according to the above-described example embodiments may include a processor, a memory for storing and executing program data, a permanent storage such as a disk drive, and/or a user interface device such as a communication port, a touch panel, a key and/or a button that communicates with an external device. Methods implemented as software modules or algorithms may be stored in a computer-readable recording medium as computer-readable codes or program instructions executable on the processor. Here, the computer-readable recording medium includes a magnetic storage medium (for example, ROMs, RAMs, floppy disks and hard disks) and an optically readable medium (for example, CD-ROMs and DVDs). The computer-readable recording medium may be distributed among network-connected computer systems, so that the computer-readable codes may be stored and executed in a distributed manner. The medium may be readable by a computer, stored in a memory, and executed on a processer.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic and/or look-up table, that may execute various functions by the control of one or more microprocessors or other control devices. Similar to that elements may be implemented as software programming or software elements, the example embodiments may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means" and "configuration" may be used broadly and are not limited to mechanical and physical elements. The terms may include the meaning of a series of routines of software in association with a processor or the like.

The above-described example embodiments are merely examples, and other embodiments may be implemented within the scope of the claims to be described later.

## Claims

1. A video mediation method performed on a server (100), comprising:
between a host terminal (200) and at least one user terminal (300-1, 300-2, ..., 300-N), establishing (S1010) a main session for mediating a main video including a video transmitted from the host terminal (200) to the at least one user terminal (300-1, 300-2, ..., 300-N);
mediating (S1020) the main video through the main session;
identifying (S1030) a user terminal set selected among the at least one user terminal (300-1, 300-2, ..., 300-N);
establishing (S1040) a sub-session for mediating a sub-video including a video transmitted from the host terminal (200) to the user terminal set between the host terminal (200) and the user terminal set while maintaining the main session; and
mediating (S1050) the sub-video through the sub-session while maintaining the main session.

2. The video mediation method of claim 1, wherein the mediating the sub-video includes:
prioritizing data transmitted and received through the sub-session while maintaining both output of data transmitted and received through the main session and output of data transmitted and received through the sub-session; and
controlling the host terminal (200) to display at least a portion of data transmitted and received through the main session on a display area of the host terminal (200) participating in the sub-session.

3. The video mediation method of claim 1 or 2, wherein the mediating the main video includes:
while the sub-session is maintained, controlling a user terminal (300-1, 300-2, ..., 300-N) not participating in the sub-session so as not to display at least a portion of data transmitted and received through the sub-session for the user terminal (300-1, 300-2, ..., 300-N) not participating in the sub-session; and
controlling the user terminal (300-1, 300-2, ..., 300-N) not participating in the sub-session so that data indicating that the sub-session is being maintained is displayed on a display area of the user terminal (300-1, 300-2, ..., 300-N) not participating in the sub-session.

4. The video mediation method of any of the previous claims 1 to 3, wherein the identifying (S1030) the user terminal set comprises:
receiving (S1110), from the host terminal (200), an input for selecting a user profile displayed on a display area of the host terminal (200);
identifying (S1120) whether a user account corresponding to the selected user profile is in a state capable of participating in a sub-session;
when the user account is capable of participating in the sub-session, transmitting (S1130) a request to participate in the sub-session to a user terminal (300-1, 300-2, ..., 300-N) corresponding to the user account; and
receiving (S1140) acceptance of the request to participate in the sub-session from the user terminal (300-1, 300-2, ..., 300-N) that received the request to participate in the sub-session.

5. The video mediation method of any of the previous claims 1 to 3, wherein the identifying (S1030) the user terminal set comprises:
receiving (S1210), from the host terminal (200), an input for selecting a user account included in a list of users who applied for sub-video mediation;
transmitting (S1220) a request to participate in a sub-session to a user terminal (300-1, 300-2, ..., 300-N) corresponding to the selected user account; and
receiving (S1230) acceptance of the request to participate in the sub-session from the user terminal (300-1, 300-2, ..., 300-N) that received the request to participate in the sub-session,
wherein the list of users who applied for sub-video mediation comprises a user account that sponsored a host account corresponding to the host terminal through the main session, and information on the user account that sponsored the host account is included with the list of users.

6. The video mediation method of any of the previous claims 1 to 5, wherein the video mediation method further comprises:
identifying (S1310) whether a preset termination condition for the main session is satisfied;
terminating (S1320) the main session when the termination condition is satisfied; and
upon termination of the main session, terminating (S1330) the sub-session.

7. A video mediation method performed in a host terminal (200), comprising:
transmitting and receiving a main video to and from at least one user terminal (300-1, 300-2, ..., 300-N) connected to a main session, through the main session;
selecting a user terminal set from the at least one user terminal (300-1, 300-2, ..., 300-N), to be connected together in a sub-session; and
transmitting and receiving a sub-video to and from the user terminal set connected to the sub-session through the sub-session while being connected to the main session.

8. A video mediation method performed in a first user terminal, comprising:
transmitting and receiving a main video to and from a host terminal (200) connected to a main session, through the main session; and
while connected to the main session, through a sub-session established between the host terminal (200) and the first user terminal, excluding a second user terminal not connected to the sub-session, and transmitting and receiving a sub-video to and from the host terminal.

9. A video mediating apparatus, as a server for mediating video between terminals, comprising:
a transceiver (120);
a memory (110) for storing instructions; and
a processor (130) connected with the transceiver (120) and the memory (110), wherein the processor (130) is configured to:
between a host terminal (200) and at least one user terminal (300-1, 300-2, ..., 300-N), establish a main session for mediating a main video including a video transmitted from the host terminal to the at least one user terminal (300-1, 300-2, ..., 300-N);
mediate the main video through the main session;
identify a user terminal set selected among the at least one user terminal (300-1, 300-2, ..., 300-N);
establish a sub-session for mediating a sub-video including a video transmitted from the host terminal to the user terminal set between the host terminal and the user terminal set while maintaining the main session; and
mediate the sub-video through the sub-session while maintaining the main session.

10. The video mediating apparatus of claim 9, wherein the processor (130), in mediating the sub-video, is configured to:
mediate the sub-video by prioritizing data transmitted and received through the sub-session while maintaining both output of data transmitted and received through the main session and output of data transmitted and received through the sub-session; and
control the host terminal (200) to display at least a portion of data transmitted and received through the main session on a display area of the host terminal participating in the sub-session.

11. The video mediating apparatus of claim 9 or 10, wherein the processor (130), in mediating the main video, is configured to:
not display at least a portion of data transmitted and received through the sub-session for the user terminal not participating in the sub-session; and
control the user terminal not participating in the sub-session so that data indicating that the sub-session is being maintained is displayed on a display area of the user terminal not participating in the sub-session.

12. The video mediating apparatus of any of the claims 9 to 11, wherein the processor (130), in identifying the user terminal set, is configured to:
receive, from the host terminal (200), an input for selecting a user profile displayed on a display area of the host terminal (200);
identify whether a user account corresponding to the selected user profile is in a state capable of participating in a sub-session;
when the user account is capable of participating in the sub-session, transmit a request to participate in the sub-session to a user terminal corresponding to the user account; and
receive acceptance of the request to participate in the sub-session from the user terminal that received the request to participate in the sub-session.

13. The video mediating apparatus of any of the claims 9 to 11, wherein the processor (130), in identifying the user terminal set, is configured to:
receive, from the host terminal (200), an input for selecting a user account included in a list of users who applied for sub-video mediation;
transmit a request to participate in a sub-session to a user terminal (300-1, 300-2, ..., 300-N) corresponding to the selected user account; and
receive acceptance of the request to participate in the sub-session from the user terminal (300-1, 300-2, ..., 300-N) that received the request to participate in the sub-session, wherein the list of users who applied for the sub-video mediation comprises a user account that sponsored a host account corresponding to the host terminal (200) through the main session, and information on the user account that sponsored the host account is included with the list of users.

14. A video mediating apparatus, as a host terminal (200) that transmits and receives a video to and from a user terminal (300-1, 300-2, ..., 300-N), comprising:
an input/output interface (230);
a transceiver (220);
a memory (210) for storing instructions; and
a processor (240) connected with the input/output interface (230), the transceiver (220) and the memory (210), wherein the processor (240) is configured to:
transmit and receive a main video to and from at least one user terminal (300-1, 300-2, ..., 300-N) connected to a main session through the main session;
select a user terminal set from the at least one user terminal (300-1, 300-2, ..., 300-N), to be connected together in a sub-session; and
transmit and receive a sub-video to and from the user terminal set connected to the sub-session through the sub-session while being connected to the main session.

15. A video mediating apparatus, as a first user terminal that transmits and receives a video to and from a host terminal (200), comprising;
an input/output interface (230);
a transceiver (220);
a memory (210) for storing instructions; and
a processor (240) connected with the input/output interface (230), the transceiver (220) and the memory (210), wherein the processor (240) is configured to:
transmit and receive a main video to and from a host terminal (200) connected to a main session, through the main session; and
while connected to the main session, through a sub-session established between the host terminal (200) and the first user terminal, exclude a second user terminal not connected to the sub-session, and transmit and receive a sub-video to and from the host terminal (200).
